# EUROPÄISCHE PATENTANMELDUNG

(11) **EP 3 823 210 A1**
(43) Veröffentlichungstag der Anmeldung: **19.05.2021**
(21) Anmeldenummer: 19209804.4
(22) Anmeldetag: 18.11.2019
(51) Int. Cl.: H04L 9/32

(54) **COMPUTERIMPLEMENTIERTES VERFAHREN ZUR STEUERUNG UND KONTROLLE DER VERTEILUNG VON VERIFIZIERTEN PERSONENBEZOGENEN NUTZER-DATEN EINES NUTZERS AUF EINER VIELZAHL VON ANBIETER-SERVERN**

(71) Anmelder: Cocus AG, 65760 Eschborn (DE)
(72) Erfinder: Hellermann, Sascha, 65760 Eschborn (DE); Hüttig, Oliver, 65760 Eschborn (DE)
(74) Vertreter: Gille Hrabal Partnerschaftsgesellschaft mbB Patentanwälte

(57) **Zusammenfassung**

Die Erfindung betrifft ein computerimplementiertes Verfahren zur Steuerung und Kontrolle der Verteilung von verifizierten personenbezogenen Nutzer-Daten eines Nutzers auf einer Vielzahl von Anbieter-Servern, auf welchen die Nutzer-Daten in Nutzerdatenbanken vollständig oder verteilt gespeichert sind, wobei die Nutzer-Daten eine Vielzahl von Feldbezeichnern und diesen zugeordneten Feldinhalten aufweisen, mit einer über ein Netzwerk zugänglichen elektronischen Einrichtung mit einer Blockchain, wobei in der Blockchain chronologisch und irreversibel aufgereihte Transaktionen in Form von Datensätzen gespeichert sind, mit dem Schritt: Steuerung und Kontrolle der Verteilung von verifizierten personenbezogenen Nutzer-Daten eines Nutzers auf einer Vielzahl von Anbieter-Servern im Umfang der in den Datensätzen der Blockchain gespeicherten Nutzer-ID, Anbieter-ID, den Feldbezeichnern zugeordneten Feldinhalten und der Information, welche dem Neu-Anbieter oder Anbieter die genannten technischen Maßnahmen gestattet oder verbietet. Das erfindungsgemäße Verfahren erlaubt daher, dass Anbieter oder Neu-Anbieter auf bestimmte verifizierte persönliche Nutzer-Daten zurückgreifen können ohne eigene aufwendige Prüfmaßnahmen und ohne die zwingende Notwendigkeit selber Nutzer-Daten zu speichern und zu verwalten.

## Beschreibung

Die Erfindung betrifft ein computerimplementiertes Verfahren zur Steuerung und Kontrolle der Verteilung von verifizierten personenbezogenen Nutzer-Daten eines Nutzers auf einer Vielzahl von Anbieter-Servern auf welchen die Nutzer-Daten in Nutzerdatenbanken vollständig oder verteilt gespeichert sind, wobei die Nutzer-Daten eine Vielzahl von Feldbezeichnern und diesen zugeordneten Feldinhalten aufweisen.

Verifizierte oder noch unverifizierte personenbezogene Nutzer-Daten fallen im Wesentlichen unter Datenschutzverordnungen, so dass zahlreiche einfachere Verfahren zur Verifizierung von diesen Daten wegen der Rechtslage nicht umsetzbar sind.

Oft muss ein Anbieter im Internet die Identität eines Nutzers feststellen, damit dieser Dienstleistungen oder Waren beziehen kann, wie beispielsweise Online Banking, Online Shopping, Bezahlvorgänge, etc. Ein übliches Verfahren zur gesetzlich vorgeschriebenen Identitätsprüfung ist das Post-Ident-Verfahren, welches unter Vorlage eines amtlichen Lichtbildausweises persönlich oder auch online über Video-Chat erfolgen kann. In jedem Fall ist aber die Mitwirkung des Nutzers, die Vorlage eines Dokuments, ein menschlicher Prüfer und eine Dokumentation des Vorgangs beim Anbieter nötig. Es werden eine Vielzahl von personenbezogenen Nutzer-Daten gespeichert, z.B. Namen, Adressen, Geburtsdaten, Bankverbindungen, etc. Die Nutzer-Daten gelten dann als "verifiziert".

Bei geringeren gesetzlichen Anforderungen, z.B. einem normalen Online-Shop, werden die übermittelten Nutzer-Daten nicht direkt geprüft, sondern die Bestellung nach Bezahlung ausgeliefert. Die Nutzer-Daten gelten auch hier nach einer erfolgreichen Transaktion als "verifiziert".

Insbesondere der Aufwand beim Post-Ident-Verfahren hält den Nutzer aber vom spontanen Eingehen neuer Geschäftsbeziehungen mit Neu-Anbietern ab, was aus Sicht der Neu-Anbieter unerwünscht ist. Es haben sich insbesondere folgende Verfahren etabliert:
Die Firma VERIME verifiziert und speichert zentral alle relevanten personenbezogenen Nutzer-Daten eines Nutzers im Auftrag des Nutzers, welche sich lediglich gegenüber VERIME verifizieren lassen muss. VERIME ist berechtigt zum Nutzer weitere Auskünfte von Dritt-Quellen einzuholen. Der Nutzer kann nun bei einem Neu-Anbieter über seinen VERIME Login seine personenbezogenen Nutzer-Daten übergeben, sodass ohne aufwändige Dateneingabe verifizierte Nutzer-Daten des Nutzers beim Neu-Anbieter vorliegen.

Analog bieten Neu-Anbieter den Login mittels Accounts von Facebook, Google oder Paypal an.

Der Arbeitserleichterung stehen jedoch folgende Nachteile entgegen: In allen Fällen wird keine banktaugliche Identifizierung angeboten, also kein echtes IDENT-Verfahren. Ferner sind alle Nutzer-Daten des Nutzers in einer externen Datenbank konzentriert, was sie zum lohnenden Hacker-Ziel macht. Je nach Firma ist das Löschen von einigen oder allen Nutzer-Daten problematisch. Viele Firmen behalten sich unabdingbar die weitere Nutzung oder gar Weitergabe der Daten vor.

Aufgabe der Erfindung ist daher ein verbessertes Verfahren zu schaffen.

Diese Aufgabe wird durch ein Verfahren mit den Merkmalen des Hauptanspruchs gelöst. Vorteilhafte Ausgestaltungen sind Gegenstand der Unteransprüche. Ferner wird beansprucht eine Verwendung einer Blockchain sowie ein Computerprogramm, lauffähig und geeignet zur Durchführung des Verfahrens nach einem der vorherigen Ansprüche.

Erfindungsgemäß wird das folgende computerimplementierte Verfahren vorgeschlagen, zur Steuerung und Kontrolle der Verteilung von verifizierten personenbezogenen Nutzer-Daten eines Nutzers auf einer Vielzahl von Anbieter-Servern auf welchen die Nutzer-Daten in Nutzerdatenbanken vollständig oder verteilt gespeichert sind. Unter den Begriff "Kontrolle der Verteilung von verifizierten personenbezogenen Nutzer-Daten" fällt auch, das Daten validert, also mit bereits verifizierten Daten bei einem anderen Anbieter, abgeglichen werden. Eine Speicherung auf einem Server bedeutet, dass dieser auf die Daten zugreifen und ggfls. Ändern und verwalten kann. Die Daten müssen nicht auf einer Festplatte in diesem Server gespeichert sein.

Das erfindungsgemäße computerimplementiertes Verfahren zur Steuerung und Kontrolle der Verteilung von verifizierten personenbezogenen Nutzer-Daten eines Nutzers auf einer Vielzahl von Anbieter-Servern auf welchen die Nutzer-Daten in Nutzerdatenbanken vollständig oder verteilt gespeichert sind, betrifft sämtliche Nutzerdaten, die für Anbieter und Dienstleister wichtig sind. Üblicherweise umfassen diese Nutzer-Daten eine Vielzahl von Feldbezeichnern, z.B. "Name", "Name KYC verifiziert". Diesen sind Feldinhalte, z.B. "Müller" zugeordnet. Jeder Anbieter hat eine eigene Kundendatenbank, welche zu einem Nutzer teilweise redundante Nutzer-Daten, z.B. "Name=Müller" oder unterschiedliche Daten aufweist: so hat zu dem Nutzer beispielsweise der Anbieter "Bankhaus" eine KYC (knowyour-customer) verifizierte Bankverbindung ("IBAN Bank, KYC" = "DE23232...00") und ein anderer Anbieter "Telefongesellschaft" eine verifizierte Telefonnummer und Emailadresse ("Tel"="+4921053363..." und "Mail"=mueller@xxx.xx"). Ein Zusammenführen und Abgleich der Daten wäre rechtlich problematisch und auch unmöglich, da unklar ist, ob die einzelnen Nutzer "Müller" in den verteilten Datenbanken identisch sind.

Erfindungsgemäß ist daher vorgesehen, in einer über ein Netzwerk zugänglichen Einrichtung mit einer Blockchain chronologisch und irreversibel aufgereihte Transaktionen in Form von Datensätzen zu speichern. Wenn im Rahmen des Verfahrens von einer Blockchain die Rede ist, ist damit natürlich auch die Einrichtung auf welcher diese Blockchain gespeichert ist, umfasst. Dies kann z.B. das Internet sein, auf welchen die Blockchain dezentral zur Verfügung gestellt wird.

Eine Blockchain ist eine kontinuierlich erweiterbare Liste von Datensätzen, "Blöcke" genannt, die mittels kryptographischer Verfahren miteinander verkettet sind. Jeder Block enthält dabei typischerweise einen kryptographisch sicheren Hash (Streuwert) des vorhergehenden Blocks, einen Zeitstempel und Transaktionsdaten.

In diesen ist sinngemäß gespeichert: "Welcher Nutzer erlaubt welchem Anbieter welche Art von Nutzer-Daten an welchen Neu-Anbieter weiterzugeben oder zumindest deren Richtigkeit zu attestieren bzw., validieren" oder "Welcher Nutzer erlaubt oder verbietet welchem Anbieter welche Art von Nutzer-Daten zu nutzen". Dabei dient die Blockchain als transparente, manipulationssichere Referenz um die Zustimmung eines Nutzers zur Datennutzung/Weitergabe oder deren Entzug zu dokumentieren. Daher sind insbesondere folgende Information in dem Datensatz gespeichert:
- Ein Zeitstempel des Zeitpunkts des Speicherns des Datensatzes in der Blockchain ermöglicht Anbietern zu erkennen, ab wann Genehmigung bzw. Versagung derselben gilt.
- Eine Nutzer-ID des Nutzers ist nur einem einzigen Nutzer zugeordnet. Unten wird näher erläutert, wie diese erzeugt, verwaltet und vor Allem signiert wird. Wesentlich ist, dass diese Nutzer-ID in allen Nutzerdatenbanken der Anbieter als Identifizierungsmerkmal eines Nutzers gilt. In der Blockchain ist zuvor unter der Nutzer-ID ein öffentlicher Nutzer-Schlüssel gespeichert.
- Eine Anbieter-ID eines der Anbieter, für welche analog das zuvor unter "Nutzer-ID" gesagte gilt, ebenso wie für die Neu-Anbieter-ID.
- Ein oder mehrere der Feldbezeichner der verifizierten Nutzer-Daten, aber nicht deren zugeordnete Feldinhalte. Damit ist in der Blockchain erkennbar, zu welche Nutzer-ID eine Verfügung über bestimmte Nutzer-Daten, nämlich die den Feldbezeichnern zugeordneten genannten Feldinhalte, getroffen wird, ohne dass die Feldinhalte in der Blockchain gespeichert sind.
- Ferner eine elektronische Nutzer-Signatur des Nutzers, welche aus einem privaten Nutzer-Schlüssel erstellt ist und welche mittels dem in der Blockchain zuvor unter der Nutzer-ID hinterlegtem öffentlichen Nutzer-Schlüssel authentifizierbar ist.
- Schließlich eine Information, welche Verfügung der Nutzer in Bezug auf die genannte Nutzer-Daten und Anbieter trifft:
   Beispielsweise gestattet er einem bestimmten weiteren Neu-Anbieter oder Anbieter den Zugriff oder die Bestätigung der Richtigkeit von den den Feldbezeichnern zugeordneten Feldinhalten durch den Anbieter. Das kann im einfachsten Fall die Zustimmung zur Nutzung bestimmter Daten sein. Es kann aber die Zustimmung dazu sein, dass ein Anbieter einem Neu-Anbieter gegenüber die Richtigkeit eines Feldinhalts bestätigt.
   Umgekehrt kann einem bestimmten Anbieter die Nutzung oder der Zugriff auf den Feldbezeichnern zugeordneten Feldinhalten auch wieder entzogen werden.

Über den Inhalt der Blockchain herrscht daher transparente und beweissichere Klarheit über die Zustimmung zur Datenverarbeitung und -weitergabe, ohne den Inhalt der Nutzer-Daten zu offenbaren. Jeder Anbieter kann sich jederzeit davon überzeugen, ob er bestimmte Nutzer-Daten verwenden, weitergeben oder gegenüber Neu-Anbietern validieren, d.h. für deren Validität bürgen, darf. Der Inhalt der Blockchain in Bezug auf die Nutzer-ID kann dabei als fälschungssichere Einwilligung in die Datennutzung, z.B. für Werbeaussendungen (z.B. Feldbezeichner "Print-Werbung-Erlaubt"), Weitergabe an Dritte (z.B. Feldbezeichner "Partner-Angebote-Erlaubt") oder auch als Robinson-Liste dienen. Jeder Teilnehmer kann sich unmittelbar vor Datennutzung über Einwilligungen des Nutzers rechtssicher in der Blockchain informieren.

Abhängig von den oben beschriebenen Informationen, die in dem Datensatz gespeichert sind, erfolgt nun eine Steuerung und Kontrolle der Verteilung von verifizierten personenbezogenen Nutzer-Daten eines Nutzers auf einer Vielzahl von Anbieter-Servern. Der Umfang der in den Datensätzen der Blockchain gespeicherten Nutzer-ID, Anbieter-ID, den Feldbezeichnern zugeordneten Feldinhalten und der Information, welche dem Neu-Anbieter oder Anbieter die genannten technischen Maßnahmen gestattet oder verbietet, bestimmt nun, wer welche personenbezogenen Nutzer-Daten weitergeben, verwenden, validieren bzw. deren Richtigkeit bestätigen darf.

Das erfindungsgemäße Verfahren erlaubt daher, dass Anbieter oder Neu-Anbieter auf bestimmte verifizierte persönliche Nutzer-Daten zurückgreifen können ohne eigene aufwendige Prüfmaßnahmen und ohne die zwingende Notwendigkeit selber Nutzer-Daten zu speichern und/oder zu verwalten. Es ist nicht nötig, dass diese Neu-Anbieter dauerhaft die Nutzer-Daten in einer eigenen Datenbank speichern, da diese beispielsweise nur einmalig zum Versand eines Produkts verwendet werden. Dadurch fallen beim Neu-Anbieter weniger Daten an, was weniger Hardware benötigt. Beispielsweise kann zum Wiedergeben eines FSK18 Inhalts (Altersverifikation) es aus Sicht des Neu-Anbieters vollkommen ausreichen, wenn das Alter eines Nutzers durch einen Anbieter, welcher zum Nutzer verifizierte Altersangaben gespeichert hat, validiert wird. Er hat kein Interesse an einer dauerhaften Speicherung der Daten, insbesondere wenn es sich um nicht wiederkehrende Laufkundschaft handelt, die gerne anonym bleiben möchte.

Ein Neu-Anbieter im Sinn der Erfindung ist nicht zwingend ein Anbieter, der in keinerlei vorheriger Geschäftsbeziehung zum Nutzer steht. Der Neu-Anbieter kann durchaus schon Nutzer-Daten des Nutzers gespeichert halten, sogar verifizierte. Wesentlich ist, dass der Neu-Anbieter irgendwelche Nutzer-Daten mit bei einem anderen Anbieter verifizierten Nutzer-Daten abgleichen kann, also diese validiert kriegt. Darunter fällt auch, dass der Neu-Anbieter bei ihm gespeicherte alte verifizierte Nutzer-Daten gegenüber aktuelleren Nutzer-Daten bei einem Anbieter validiert und somit weiß, dass diese noch aktuell sind.

Ein Neu-Anbieter im Sinn der Erfindung ist, wer von anderen Anbietern bereits verifizierte Daten anfragt bzw. bestätigt bekommen möchte.

Vorzugsweise weist das Verfahren einen oder mehrere der folgenden Schritte auf:
S1: Bereitstellen einer über ein Netzwerk zugänglichen Blockchain. Dieses ist eine Selbstverständlichkeit und es muss ein erster Datensatz vorhanden sein.
S2: Hinzufügen einer ersten Transaktion in Form eines ersten Datensatzes an einer ersten Adresse zur Blockchain, wobei der erste Datensatz mindestens einen öffentlichen Nutzer-Schlüssel welcher einem Nutzer zugeordnet ist, umfasst und die erste Adresse die Nutzer-ID des Nutzers bildet. In der Blockchain ist zuerst die Nutzer-ID, die der Blockchain Adresse entspricht, hinterlegt. Der Name des Nutzers ist also nicht erkennbar. Der Nutzer muss sich daher über eine elektronische Signatur erkennbar machen, welche durch den ebenfalls in der Blockchain zur Nutzer-ID gespeicherten öffentlichen Nutzer-Schlüssel authentifizierbar ist.

Im folgenden Schritt wird die Nutzer-ID mit den verifizierten Nutzer-Daten bei einem Anbieter gekoppelt. Dies geschieht auf Veranlassung des Nutzers, beispielsweise von einer App aus:
S3: Speicherung der Nutzer-ID in einer Nutzerdatenbank auf einem Anbieter-Server eines Anbieters, wobei die Nutzerdatenbank bereits verifizierte personenbezogene Nutzer-Daten des Nutzers enthält und Kopplung der Nutzer-ID mit den in der Nutzerdatenbank bereits gespeicherten verifizierten personenbezogenen Nutzer-Daten des Nutzers, nach Anforderung des Nutzers auf dem Nutzercomputer, wobei mittels des Computerprogramms eine Verbindung zu dem Anbieter-Server hergestellt wird. Somit ist der Nutzer nur über eine anonyme Nutzer-ID aus der Blockchain bekannt und kann elektronische Signaturen zur Identifizierung und Authentifizierung nutzen.

Im folgenden Schritt möchte der Nutzer alle verifizierten personenbezogenen Nutzer-Daten aus der Nutzerdatenbank des Anbieters auf seinen Computer, z.B. seine App, übertragen. Diese sind dabei mit einer Anbieter-Signatur versehen:
S4: Anfordern der bereits verifizierten personenbezogenen Nutzer-Daten aus der Nutzerdatenbank des Anbieters durch den Nutzer und Übertragen und Speichern der angeforderten verifizierten personenbezogenen Nutzer-Daten mit einer elektronischen Anbieter-Signatur des Anbieters vom Anbieter auf den Nutzer-Computer des Nutzers durch den Computer.

Dabei umfassen die Nutzer-Daten mindestens einen Feldbezeichner und einen Feldinhalt.

Im folgenden Schritt soll in der Blockchain sinngemäß eine Erlaubnis gespeichert werden: "Welcher Nutzer erlaubt welchem Anbieter welche Art von Nutzer-Daten an welchen Neu-Anbieter weiterzugeben oder zumindest deren Richtigkeit zu attestieren":
S5: Hinzufügen einer zweiten Transaktion in Form eines zweiten Datensatzes an einer zweiten Adresse zur Blockchain, wobei der zweite Datensatz mindestens umfasst
- die Nutzer-ID des Nutzers;
- die Anbieter-ID des Anbieters, bei welchem die verifizierten Nutzer-Daten hinterlegt sind;
- die Feldbezeichner der verifizierten Nutzer-Daten, aber nicht deren Feldinhalte;
- eine Neu-Anbieter-ID, welche einem Neu-Anbieter zugeordnet ist und welche zuvor in der Blockchain gespeichert ist;
- die elektronische Nutzer-Signatur des Nutzers, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist

Alle IDs sind dabei zuvor in der Blockchain mit öffentlichen Schlüsseln hinterlegt und können daher über Signaturen authentifiziert werden. Dies funktioniert sinngemäß genauso, wie in Schritt 2) im Zusammenhang mit dem Anlegen der Nutzer-ID in der Blockchain beschrieben.

Im folgenden Schritt werden die vom Neu-Anbieter gewünschten und vom Nutzer freigegebenen verifizierten Nutzer-Daten vom Computer des Nutzers zum Neu-Anbieter übertragen und tragen die elektronische Signatur des Anbieters, welche diese Daten als verifiziert erachtet:
S6: Übertragen
- der Nutzer-ID,
- der zweiten Adresse der Blockchain;
- eines Nutzerdatensatzes für den Neu-Anbieter, umfassend:
   angefragte-Feldbezeichner derjenigen Nutzer-Daten, die vom Neu-Anbieter zum Abschluss einer Kundenbeziehung mit dem Nutzer vom Nutzer benötigt werden und
   der verifizierten Feldinhalte aus den verifizierten personenbezogene Nutzer-Daten, welche zu den angefragten-Feldbezeichnern zugeordnet wurden,
   zusammen mit derjenigen elektronischen Anbieter-Signatur, welche zusammen mit den betroffenen verifizierten personenbezogenen Nutzer-Daten auf dem Nutzer-Computer gespeichert ist;
      - der elektronische Nutzer-Signatur des Nutzers, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist,
   vom Nutzer-Computer über das Netzwerk an den Neu-Anbieter-Server des Neu-Anbieters und deren Speicherung auf dem Neu-Anbieter-Server.

Eine Besonderheit ist hier, dass die vom Neu-Anbieter gewünschten Daten ggfls. angefragte-Feldbezeichner tragen können, die nicht mit den beim Nutzer gespeicherten Feldbezeichnern übereinstimmen: beispielsweise zum Namen eines Nutzers kann der Feldbezeichner z.B. "Name", "Nachname", "Geb.Name" oder dergl. lauten. Daher ist erst ein Abgleich nötig: Dieser kann über den Computer über Tabellen, Plausibilitäten, Algorithmen und/oder unter manueller Zuordnung durch den Nutzer auf dem Computer erfolgen. In jedem Fall ist es bevorzugt, dass der Nutzer die zu übertragenden Paarungen von Feldbezeichner und Feldinhalte sehen, ggfls. verändern und freigeben kann. Daraus wird der zu übertragende Nutzerdatensatz gebildet.

Im nächsten Schritt kann der Neu-Anbieter sich von der Unverfälschtheit der Nutzer-Daten im Nutzerdatensatz überzeugen durch eine Validierung:
S7: Validierung der Feldinhalte des auf den Neu-Anbieter-Server übertragenen Nutzerdatensatzes
S7.1: durch den Neu-Anbieter-Server mittels Prüfung der elektronischen Anbieter-Signatur aus dem Nutzerdatensatz mittels des in der Blockchain zuvor unter der Anbieter-ID hinterlegtem öffentlichen Anbieter-Schlüssels.

Dabei erfolgt keine Rückfrage durch den Neu-Anbieter beim Anbieter, welcher die bei ihm bereits verifizierten Nutzer-Daten signiert hat. Der Neu-Anbieter verlässt sich zum Zwecke der Validierung auf die elektronischen Signaturen des Anbieters und ggfls. des Nutzers.

Alternativ erfolgt statt Schritt S7.1 oder zusätzlich eine Validierungs-Rückfrage beim Anbieter, die optional auch gegen Entgelt zugunsten des Anbieters erfolgen kann:
S7: Validierung der Feldinhalte des auf den Neu-Anbieter-Server übertragenen Nutzerdatensatzes
S7.2: durch den Neu-Anbieter-Server mittels Anfrage an den Anbieter-Server zur Bestätigung der Identität der Feldinhalte des auf den Neu-Anbieter-Server übertragenen Nutzerdatensatzes.

Nach erfolgreichem Durchlaufen des Schrittes, erfolgt das Speichern der Daten beim Neu-Anbieter:
S8: Abspeichern des zuvor validierten Nutzerdatensatzes beim Neu-Anbieter durch den Neu-Anbieter-Server als verifizierte Nutzer-Daten auf dem Nau-Anbieter-Server.

Dabei kann das Abspeichern erfolgen zum Aufbau einer dauerhaften Kundendatenbank, oder auch nur temporär zur Abwicklung eines einzigen Geschäftsvorgangs.

Unter Bezug auf die Zeichnungen wird das Verfahren sowie exemplarische Ausgestaltungen der Verfahrensschritte S2 bis S7 erläutert. Dabei bilden die Zahlen der Verfahrensschritte S1-S8 unmittelbar die Bezugszeichen in den Figuren:

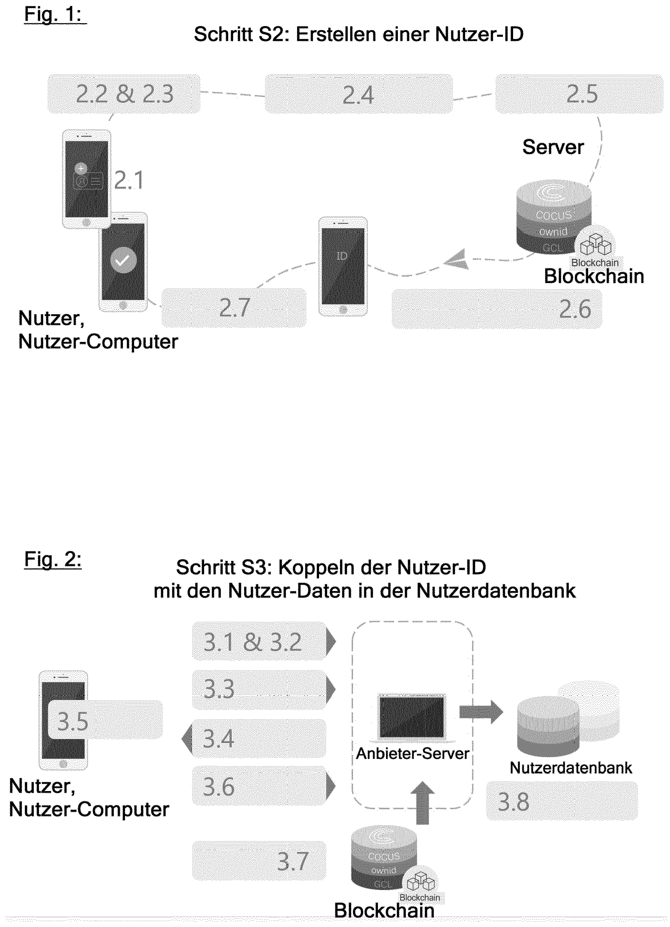

Fig. 1 zeigt, dass den Schritt S2), welcher der Erst-Erstellung einer Nutzer-ID dient, welche in der Blockchain hinterlegt wird und zu der Authentifizierung des Nutzers dient. Mit diesem Schritt soll eine Möglichkeit eröffnet werden, die Identität eines Nutzers schnell und sicher z. B. für die Abwicklung von Verträgen, Online-Käufen, oder auch Login- Verfahren festzustellen. Für einen zukünftigen Identitätsabgleich wird im Schritt S2 einem Nutzer (Vertragsteilnehmer, Kunden, Lieferanten, etc.) eine digitale Nummer (ID) "zugeteilt". Damit diese elektronisch signieren können, wird ein Schlüsselpaar auf dem Computer des Nutzers angelegt: Der öffentliche Schlüssel wird in einem ersten Datensatz nach Art eines "Smart Contract" in der Blockchain veröffentlicht. Die entstehende Adresse des Smart Contracts dient nun als digitale Nummer (Nutzer-ID). Diese ID wird derart für alle korrespondierende Teilnehmer, also Nutzer, Anbieter und Neu-Anbieter erstellt und den Teilnehmern mitgeteilt, da mit ihr der öffentliche Schlüssel eines Teilnehmers in der Blockchain gefunden werden kann. Die Berechnung, dass eine bereitgestellte Signatur korrekt ist, erfolgt durch die Teilnehmer, nachdem diese den öffentlichen Schlüssel der ID geladen haben. Die Blockchain dient hier als allgemein erreichbare Datenbank.

Es werden dabei keinerlei Daten im Sinne einer DSGVO (Datenschutz-Grundverordnung) in der Blockchain abgelegt. Es kann nur ein Abgleich einer zuvor beliebig generierten ID Nummer mit den in der Blockchain hinterlegten Nummer vorgenommen werden.

Im Einzelnen umfasst diese Erstellung aus dem Schritt S2 die folgenden Unterschritte:
S2.1: Ausführen eines Computerprogramms auf einem Nutzer-Computer des Nutzers;
S2.2: Auslösen durch den Nutzer der Erzeugung eines Schlüsselpaares umfassend einen Privaten Nutzer-Schlüssel und einen Öffentlichen Nutzer-Schlüssel durch das Computerprogramm;
S2.3: Speicherung des Öffentlichen Nutzer-Schlüssels und des Privaten Nutzer-Schlüssels auf dem Nutzer-Computer des Nutzers durch das Computerprogramm;
S2.4: Übertragung des Öffentlichen Nutzer-Schlüssels über das Netzwerk an einen Server durch das Computerprogramm;
S2.5: Hinzufügen der ersten Transaktion zur Blockchain an der ersten Adresse und Speicherung der Transaktion in der Blockchain an der ersten Adresse durch den Server;
S2.6: Übermittlung der Nutzer-ID, also der ersten Adresse, des Öffentlichen Nutzer-Schlüssels in der Datenbank, an das Computerprogramm des Nutzers über das Netzwerk;
S2.7: Speichern der Nutzer-ID durch das Computerprogramm auf dem Nutzer-Computer des Nutzers.

Fig. 2 zeigt, dass der Schritt S3, also die Kopplung der Nutzer-ID mit den Nutzer-Daten des Nutzers in der Nutzerdatenbank beim Anbieter die folgenden Unterschritte umfasst:
S3.1: Herstellen einer Verbindung vom Nutzer-Computer mit dem Anbieter-Server, der mit der Nutzerdatenbank des Anbieters verbunden ist, wobei die Nutzerdatenbank die bereits verifizierten personenbezogenen Nutzer-Daten, die mit der Nutzer-ID des Nutzers gekoppelt werden sollen enthält;
S3.2: Einloggen des Nutzers über den Nutzer-Computer auf dem Anbieter-Server und Herstellen einer gesicherten Verbindung für die folgenden Schritte 3.3 -3.8;
S3.3: Anfordern durch den Nutzer auf dem Nutzer-Computer, dass die Kopplung erfolgen soll und Übertragen dieser Anforderung vom Nutzer-Computer an den Anbieter-Server über das Netzwerk;
S3.4: Beantwortung dieser Anforderung durch den Anbieter-Server durch Senden einer Bestätigung an den Nutzer-Computer, dass die Nutzer-ID mit den zugehörigen Nutzerdaten gekoppelt werden soll und die Nutzer-ID vom Nutzer-Computer auf den Anbieter-Server übertragen werden soll;
S3.5: Erstellung einer elektronischen Nutzer-Signatur des Nutzers auf dem Nutzer-Computer, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist;
S3.6: Senden der Nutzer-ID zusammen mit der elektronischen Nutzer-Signatur vom Nutzer-Computer an den Anbieter-Server;
S3.7: Prüfen der Echtheit der elektronischen Nutzer-Signatur auf dem Anbieter-Server mittels des unter der Nutzer-ID in der Blockchain gespeicherten öffentlichen Nutzer-Schlüssels;
S3.8: Koppeln und Speichern der übertragenen Nutzer-ID mit den verifizierten personenbezogenen Nutzer-Daten des Nutzers in der Nutzerdatenbank des Anbieter-Servers.

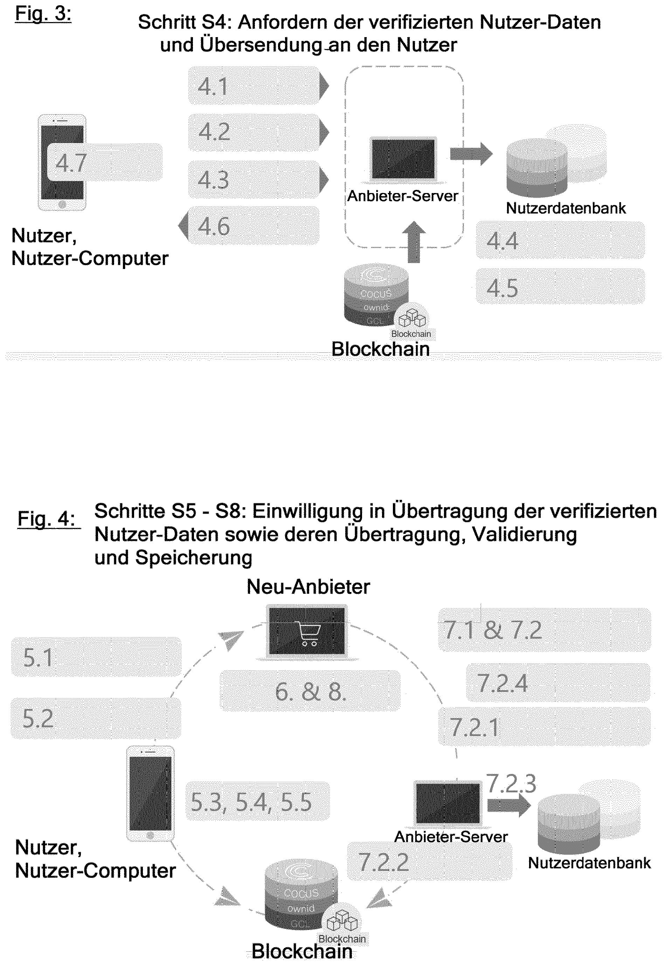

Fig. 3 zeigt, dass der Schritt S4) folgende Unterschritte umfasst. Dabei geht es darum, die verifizierten Nutzer-Daten vom Anbieter in signierter Form auf den Computer des Nutzers zu übertragen. Dazu fordert der Nutzer die verifizierten Daten beim Anbieter an:
S4.1: Herstellen einer Verbindung vom Nutzer-Computer mit einem Anbieter-Server, der mit einer Nutzerdatenbank eines Anbieters verbunden ist, wobei die Nutzerdatenbank bereits verifizierte personenbezogene Nutzer-Daten, die mit der Nutzer-ID des Nutzers gekoppelt sind, und die Nutzer-ID selber enthält;
S4.2: Auslösen der Anforderung von den verifizierten personenbezogenen Nutzer-Daten aus der Nutzerdatenbank des Anbieters durch den Nutzer auf dem Nutzer-Computer;
S4.3: Übertragen der Anforderung vom Computer an den Anbieter-Server über das Netzwerk unter Verwendung der Nutzer-ID und einer elektronischen Nutzer-Signatur des Nutzers, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist;
S4.4: Prüfen der Echtheit der elektronischen Nutzer-Signatur auf dem Anbieter-Server mittels des unter der Nutzer-ID in der Blockchain gespeicherten öffentlichen Nutzer-Schlüssels;
S4.5: Auffinden der angeforderten und mit der Nutzer-ID des Nutzers gekoppelten verifizierten personenbezogenen Nutzer-Daten mittels der zugeordneten Nutzer-ID des Nutzers aus der Nutzerdatenbank des Anbieters auf dem Anbieter-Server und ebenfalls Erstellen einer elektronischen Anbieter-Signatur des Anbieters, welche aus einem privaten Anbieter-Schlüssel erstellt ist und welcher mittels einem in der Blockchain zuvor unter einer Anbieter-ID hinterlegtem öffentlichen Anbieter-Schlüssel authentifizierbar ist;
S4.6: Übertragen der aufgefundenen verifizierten personenbezogenen Nutzer-Daten vom Server über das Netzwerk an den Nutzer-Computer zusammen mit der elektronischen Anbieter-Signatur;
S4.7: Speichern der übertragenen verifizierten personenbezogenen Nutzer-Daten zusammen mit der elektronischen Anbieter-Signatur auf dem Nutzer-Computer mittels des Computerprogramms.

Fig. 4 zeigt eine Vielzahl von Schritten S5 - S8. Im Schritt S5 willigt der Nutzer für alle Teilnehmer sichtbar in der Blockchain ein, dass der Anbieter berechtigt ist, ausgewählte verifizierte Nutzer-Daten gegenüber einem Neu-Anbieter seiner Wahl zu verifizieren. Der Nutzer wählt beispielsweise aus, ob ein Datenabgleich gegen seine Bank oder einen Kreditkartenabwickler erfolgen soll. Diese Einwilligung wird in der Blockchain gespeichert und ist kann von allen Beteiligten eingesehen werden.

Dieser Datenabgleich, also eine Validierung erfolgt dann später im Schritt S7 zwischen dem Neu-Anbieter und dem bestätigenden Institut, z. B. der Bank.

Vorzugsweise umfasst der Schritt S5) einen oder mehrere der folgenden Unterschritte:
S5.1: Anmelden des Nutzers über den Nutzer-Computer bei einem über das Netzwerk verbundenen Neu-Anbieter-Server eines Neu-Anbieters, wobei in der Blockchain zuvor eine dem Neu-Anbieter zugeordnete Neu-Anbieter-ID gespeichert ist;
S5.2: Übertragen einer Liste mit angefragten-Feldbezeichnern derjenigen Nutzerdaten, die vom Neu-Anbieter zum Abschluss einer Kundenbeziehung mit dem Nutzer vom Nutzer benötigt werden, wobei die Liste vom Neu-Anbieter-Server zum Nutzer-Computer übertragen wird;
S5.3: Abgleich der angefragten-Feldbezeichnern mit den auf dem Nutzer-Computer bereits gespeicherten Feldbezeichnern der verifizierten personenbezogenen Nutzer-Daten, optional mittels manueller Zuordnung von den bereits gespeicherten Feldbezeichnern bzw. Feldinhalten zu den angefragten-Feldbezeichnern durch den Nutzer auf dem Nutzer-Computer oder nach Bestätigung einer auf den Computer durch das Computerprogramm vorgeschlagenen Zuordnung;
S5.4: Zusammenführen derjenigen bereits verifizierten Feldinhalte aus den verifizierten personenbezogene Nutzer-Daten zu den angefragten-Feldbezeichnern und zu einem Nutzerdatensatz für den Neu-Anbieter, welcher an den Neu-Anbieter-Server gesendet werden soll, auf dem Nutzercomputer;
S5.5: Hinzufügen der zweiten Transaktion in Form des zweiten Datensatzes an der zweiten Adresse zur Blockchain.

Im Schritt S6 werden die vom Neu-Anbieter gewünschten und vom Nutzer freigegebenen verifizierten Nutzer-Daten vom Computer des Nutzers zum Neu-Anbieter übertragen und tragen die elektronische Signatur des Anbieters.

Unter Schritt S7 fallen alle Maßnahmen zum Validieren, d.h. Überprüfen der Echtheit der Herkunft der der Nutzer-Daten im Nutzerdatensatz durch die der Neu-Anbieter.

In der ersten Alternative erfolgt durch die Schritte S7 und S7.1 keine Rückfrage durch den Neu-Anbieter beim Anbieter, welcher die bei ihm bereits verifizierten Nutzer-Daten signiert hat. Der Neu-Anbieter auf die elektronischen Signaturen des Anbieters und ggfls. des Nutzers:
S7: Validierung der Feldinhalte des auf den Neu-Anbieter-Server übertragenen Nutzerdatensatzes
S7.1: durch den Neu-Anbieter-Server mittels Prüfung der elektronischen Anbieter-Signatur aus dem Nutzerdatensatz mittels des in der Blockchain zuvor unter der Anbieter-ID hinterlegtem öffentlichen Anbieter-Schlüssels;

Alternativ erfolgt statt Schritt S7.1 oder zusätzlich eine Validierungs-Rückfrage unmittelbar beim Anbieter, die optional auch gegen ein Entgelt zugunsten des Anbieters erfolgen kann:
S7: Validierung der Feldinhalte des auf den Neu-Anbieter-Server übertragenen Nutzerdatensatzes
S7.2: durch den Neu-Anbieter-Server mittels Anfrage an den Anbieter-Server zur Bestätigung der Identität der Feldinhalte des auf den Neu-Anbieter-Server übertragenen Nutzerdatensatzes;
S7.2.1: Übertragung der zweiten Adresse, der Nutzer-ID, und der zu vom Anbieter zu verifizierendem Feldinhalte vom Neu-Anbieter-Server zum Anbieter-Server;
S7.2.2: Überprüfung durch den Anbieter-Server, ob der Nutzer eine Zustimmung zur Verifikation der zu verifizierenden Feldinhalte erteilt hat durch Vergleich des Inhalts des zweiten Datensatzes an der zweiten Adresse in der Blockchain auf Übereinstimmung mit:
   - der Nutzer-ID des Nutzers;
   - der Anbieter-ID des Anbieters, bei welchem die verifizierten Nutzer-Daten hinterlegt sind;
   - der Feldbezeichner der zu verifizierenden Feldinhalte;
   - die Nutzer-ID des Neu-Anbieters
S7.2.3: Wenn Überprüfung aus dem vorherigen Schritt positiv: Prüfung der Identität der zu verifizierenden Feldinhalte des auf dem Anbieter-Server gespeicherten preist verifizierten personenbezogenen Nutzerdatensatzes;
S7.2.4: Wenn die Identitätsprüfung aus dem vorherigen Schritt positiv: Übermittlung des Ergebnisses der Prüfung als Ja/Nein-Wert für alle und/oder jeden einzelnen Feldbezeichner vom Anbieter-Server an den Neu-Anbieter Server, insbesondere ohne Übertragung des Feldinhalts zu den Feldbezeichnern.

Bei der Durchführung des erfindungsgemäßen Verfahrens sind nicht alle Schritte und Unterschritte zwingend durchzuführen. Der Fachmann erkennt, dass auch durch Abwandlungen in der Reihenfolge und hier nicht beschriebenen Abwandlungen von Schritten bzw. Unterschritten, die erfindungsgemäß genannten Vorteile des Verfahrens erreicht werden können.

## Patentansprüche

1. Computerimplementiertes Verfahren zur Steuerung und Kontrolle der Verteilung von verifizierten personenbezogenen Nutzer-Daten eines Nutzers auf einer Vielzahl von Anbieter-Servern, auf welchen die Nutzer-Daten in Nutzerdatenbanken vollständig oder verteilt gespeichert sind, wobei die Nutzer-Daten eine Vielzahl von Feldbezeichnern und diesen zugeordneten Feldinhalten aufweisen,
mit einer über ein Netzwerk zugänglichen elektronischen Einrichtung mit einer Blockchain, wobei in der Blockchain chronologisch und irreversibel aufgereihte Transaktionen in Form von Datensätzen gespeichert sind, welche jeweils umfassen:
- einen Zeitstempel des Zeitpunkts des Speicherns des Datensatzes in der Blockchain;
- eine Nutzer-ID des Nutzers;
- eine Anbieter-ID eines der Anbieter zu welchem einer der Anbieter-Server zugeordnet ist;
- ein oder mehrere der Feldbezeichner der verifizierten Nutzer-Daten, aber nicht deren zugeordnete Feldinhalte;
- eine elektronische Nutzer-Signatur des Nutzers, welche aus einem privaten Nutzer-Schlüssel erstellt ist und welcher mittels einem in der Blockchain zuvor unter der Nutzer-ID hinterlegtem öffentlichen Nutzer-Schlüssel authentifizierbar ist,
- eine Information, dass der Nutzer
∘ einem bestimmten weiteren Neu-Anbieter den Zugriff oder die Bestätigung der Richtigkeit von den den Feldbezeichnern zugeordneten Feldinhalten durch den Anbieter gestattet; und/oder
∘ einem bestimmten Anbieter den Zugriff auf den Feldbezeichnern zugeordneten Feldinhalten erlaubt und/oder verbietet,
mit dem Schritt:
Steuerung und Kontrolle der Verteilung von verifizierten personenbezogenen Nutzer-Daten eines Nutzers auf der Vielzahl von Anbieter-Servern im Umfang der in den Datensätzen der Blockchain gespeicherten Nutzer-ID, Anbieter-ID, den Feldbezeichnern zugeordneten Feldinhalten und der Information, welche dem Neu-Anbieter oder Anbieter die genannten technischen Maßnahmen gestattet oder verbietet.

2. Verfahren nach Anspruch 1, mit einem oder mehreren der folgenden Schritte:
S1: Bereitstellen einer über ein Netzwerk zugänglichen elektronischen Einrichtung mit einer Blockchain;
S2: Hinzufügen einer ersten Transaktion in Form eines ersten Datensatzes an einer ersten Adresse zur Blockchain, wobei der erste Datensatz mindestens einen öffentlichen Nutzer-Schlüssel welcher einem Nutzer zugeordnet ist, umfasst und die erste Adresse die Nutzer-ID des Nutzers bildet;
S3: Speicherung der Nutzer-ID in einer Nutzerdatenbank auf einem Anbieter-Server eines Anbieters, wobei die Nutzerdatenbank bereits verifizierte personenbezogene Nutzer-Daten des Nutzers enthält und Kopplung der Nutzer-ID mit den in der Nutzerdatenbank bereits gespeicherten verifizierten personenbezogenen Nutzer-Daten des Nutzers, nach Anforderung des Nutzers auf dem Nutzercomputer, wobei mittels des Computerprogramms eine Verbindung zu dem Anbieter-Server hergestellt wird;
S4: Anfordern der bereits verifizierten personenbezogenen Nutzer-Daten aus der Nutzerdatenbank des Anbieters durch den Nutzer und Übertragen und Speichern der angeforderten verifizierten personenbezogenen Nutzer-Daten mit einer elektronischen Anbieter-Signatur des Anbieters vom Anbieter auf den Nutzer-Computer des Nutzers durch den Computer,
wobei die Nutzer-Daten mindestens einen Feldbezeichner und einen Feldinhalt umfassen;
S5: Hinzufügen einer zweiten Transaktion in Form eines zweiten Datensatzes an einer zweiten Adresse zur Blockchain, wobei der zweite Datensatz mindestens umfasst
- die Nutzer-ID des Nutzers;
- die Anbieter-ID des Anbieters, bei welchem die verifizierten Nutzer-Daten hinterlegt sind;
- die Feldbezeichner der verifizierten Nutzer-Daten, aber nicht deren Feldinhalte;
- eine Neu-Anbieter-ID, welche einem Neu-Anbieter zugeordnet ist und welche zuvor in der Blockchain gespeichert ist;
- die elektronische Nutzer-Signatur des Nutzers, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist;
S6: Übertragen
- der Nutzer-ID,
- der zweiten Adresse der Blockchain;
- eines Nutzerdatensatzes für den Neu-Anbieter, umfassend:
angefragte-Feldbezeichner derjenigen Nutzer-Daten, die vom Neu-Anbieter zum Abschluss einer Kundenbeziehung mit dem Nutzer vom Nutzer benötigt werden und
die verifizierten Feldinhalte aus den verifizierten personenbezogene Nutzer-Daten, welche zu den angefragten-Feldbezeichnern zugeordnet wurden,
zusammen mit derjenigen elektronischen Anbieter-Signatur, welche zusammen mit den betroffenen verifizierten personenbezogenen Nutzer-Daten auf dem Nutzer-Computer gespeichert ist;
- der elektronische Nutzer-Signatur des Nutzers, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist,
vom Nutzer-Computer über das Netzwerk an den Neu-Anbieter-Server des Neu-Anbieters und deren Speicherung auf dem Neu-Anbieter-Server;
S7: Validierung der Feldinhalte des auf den Neu-Anbieter-Server übertragenen Nutzerdatensatzes
S7.1: durch den Neu-Anbieter-Server mittels Prüfung der elektronischen Anbieter-Signatur aus dem Nutzerdatensatz mittels des in der Blockchain zuvor unter der Anbieter-ID hinterlegtem öffentlichen Anbieter-Schlüssels;
und/oder
S7.2: durch den Neu-Anbieter-Server mittels Anfrage an den Anbieter-Server zur Bestätigung der Identität der Feldinhalte des auf den Neu-Anbieter-Server übertragenen Nutzerdatensatzes; und
S8: Abspeichern des zuvor validierten Nutzerdatensatzes beim Neu-Anbieter durch den Neu-Anbieter-Server als verifizierte Nutzer-Daten auf dem Neu-Anbieter-Server.

3. Verfahren nach einem der vorherigen Ansprüche, wobei der Schritt 2) einen oder mehrere der folgenden Unterschritte umfasst:
S2.1: Ausführen eines Computerprogramms auf einem Nutzer-Computer des Nutzers;
S2.2: Auslösen durch den Nutzer der Erzeugung eines Schlüsselpaares umfassend einen Privaten Nutzer-Schlüssel und einen Öffentlichen Nutzer-Schlüssel durch das Computerprogramm;
S2.3: Speicherung des Öffentlichen Nutzer-Schlüssels und des Privaten Nutzer-Schlüssels auf dem Nutzer-Computer des Nutzers durch das Computerprogramm;
S2.4: Übertragung des Öffentlichen Nutzer-Schlüssels über das Netzwerk an einen Server durch das Computerprogramm;
S2.5: Hinzufügen der ersten Transaktion zur Blockchain an der ersten Adresse und Speicherung der Transaktion in der Blockchain an der ersten Adresse durch den Server;
S2.6: Übermittlung der Nutzer-ID, also der ersten Adresse, des Öffentlichen Nutzer-Schlüssels in der Datenbank, an das Computerprogramm des Nutzers über das Netzwerk;
S2.7: Speichern der Nutzer-ID durch das Computerprogramm auf dem Nutzer-Computer des Nutzers.

4. Verfahren nach einem der vorherigen Ansprüche, wobei der Schritt 3) einen oder mehrere der folgenden Unterschritte umfasst:
S3.1: Herstellen einer Verbindung vom Nutzer-Computer mit dem Anbieter-Server, der mit der Nutzerdatenbank des Anbieters verbunden ist, wobei die Nutzerdatenbank die bereits verifizierten personenbezogenen Nutzer-Daten, die mit der Nutzer-ID des Nutzers gekoppelt werden sollen enthält;
S3.2: Einloggen des Nutzers über den Nutzer-Computer auf dem Anbieter-Server und Herstellen einer gesicherten Verbindung für die folgenden Schritte 3.3 - 3.8;
S3.3: Anfordern durch den Nutzer auf dem Nutzer-Computer, dass die Kopplung erfolgen soll und Übertragen dieser Anforderung vom Nutzer-Computer an den Anbieter-Server über das Netzwerk;
S3.4: Beantwortung dieser Anforderung durch den Anbieter-Server durch Senden einer Bestätigung an den Nutzer-Computer, dass die Nutzer-ID mit den zugehörigen Nutzerdaten gekoppelt werden soll und die Nutzer-ID vom Nutzer-Computer auf den Anbieter-Server übertragen werden soll;
S3.5: Erstellung einer elektronischen Nutzer-Signatur des Nutzers auf dem Nutzer-Computer, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist;
S3.6: Senden der Nutzer-ID zusammen mit der elektronischen Nutzer-Signatur vom Nutzer-Computer an den Anbieter-Server;
S3.7: Prüfen der Echtheit der elektronischen Nutzer-Signatur auf dem Anbieter-Server mittels des unter der Nutzer-ID in der Blockchain gespeicherten öffentlichen Nutzer-Schlüssels;
S3.8: Koppeln und Speichern der übertragenen Nutzer-ID mit den verifizierten personenbezogenen Nutzer-Daten des Nutzers in der Nutzerdatenbank des Anbieter-Servers.

5. Verfahren nach einem der vorherigen Ansprüche, wobei der Schritt 4) einen oder mehrere der folgenden Unterschritte umfasst:
S4.1: Herstellen einer Verbindung vom Nutzer-Computer mit einem Anbieter-Server, der mit einer Nutzerdatenbank eines Anbieters verbunden ist, wobei die Nutzerdatenbank bereits verifizierte personenbezogene Nutzer-Daten, die mit der Nutzer-ID des Nutzers gekoppelt sind, und die Nutzer-ID selber enthält;
S4.2: Auslösen der Anforderung von den verifizierten personenbezogenen Nutzer-Daten aus der Nutzerdatenbank des Anbieters durch den Nutzer auf dem Nutzer-Computer;
S4.3: Übertragen der Anforderung vom Computer an den Anbieter-Server über das Netzwerk unter Verwendung der Nutzer-ID und einer elektronischen Nutzer-Signatur des Nutzers, welche aus dem privaten Nutzer-Schlüssel erstellt ist und welcher mittels einem in der Blockchain zuvor unter der Nutzer-ID hinterlegtem öffentlichen Nutzer-Schlüssel authentifizierbar ist;
S4.4: Prüfen der Echtheit der elektronischen Nutzer-Signatur auf dem Anbieter-Server mittels des unter der Nutzer-ID in der Blockchain gespeicherten öffentlichen Nutzer-Schlüssels;
S4.5: Auffinden der angeforderten und mit der Nutzer-ID des Nutzers gekoppelten verifizierten personenbezogenen Nutzer-Daten mittels der zugeordneten Nutzer-ID des Nutzers aus der Nutzerdatenbank des Anbieters auf dem Anbieter-Server und ebenfalls Erstellen einer elektronischen Anbieter-Signatur des Anbieters, welche aus einem privaten Anbieter-Schlüssel erstellt ist und welcher mittels einem in der Blockchain zuvor unter einer Anbieter-ID hinterlegtem öffentlichen Anbieter-Schlüssel authentifizierbar ist;
S4.6: Übertragen der aufgefundenen verifizierten personenbezogenen Nutzer-Daten vom Server über das Netzwerk an den Nutzer-Computer zusammen mit der elektronischen Anbieter-Signatur;
S4.7: Speichern der übertragenen verifizierten personenbezogenen Nutzer-Daten zusammen mit der elektronischen Anbieter-Signatur auf dem Nutzer Computer mittels des Computerprogramms.

6. Verfahren nach einem der vorherigen Ansprüche, wobei der Schritt 5 einen oder mehrere der folgenden Unterschritte umfasst:
S5.1: Anmelden des Nutzers über den Nutzer-Computer bei einem über das Netzwerk verbundenen Neu-Anbieter-Server eines Neu-Anbieters, wobei in der Blockchain zuvor eine dem Neu-Anbieter zugeordnete Neu-Anbieter-ID gespeichert ist;
S5.2: Übertragen einer Liste mit angefragten-Feldbezeichnern derjenigen Nutzerdaten, die vom Neu-Anbieter zum Abschluss einer Kundenbeziehung mit dem Nutzer vom Nutzer benötigt werden, wobei die Liste vom Neu-Anbieter-Server zum Nutzer-Computer übertragen wird;
S5.3: Abgleich der angefragten-Feldbezeichnern mit den auf dem Nutzer-Computer bereits gespeicherten Feldbezeichnern der verifizierten personenbezogenen Nutzer-Daten, optional mittels manueller Zuordnung von den bereits gespeicherten Feldbezeichnern bzw. Feldinhalten zu den angefragten-Feldbezeichnern durch den Nutzer auf dem Nutzer-Computer oder nach Bestätigung einer auf den Computer durch das Computerprogramm vorgeschlagenen Zuordnung;
S5.4: Zusammenführen derjenigen bereits verifizierten Feldinhalte aus den verifizierten personenbezogene Nutzer-Daten zu den angefragten-Feldbezeichnern und zu einem Nutzerdatensatz für den Neu-Anbieter, welcher an den Neu-Anbieter-Server gesendet werden soll, auf dem Nutzercomputer;
S5.5: Hinzufügen der zweiten Transaktion in Form des zweiten Datensatzes an der zweiten Adresse zur Blockchain.

7. Verfahren nach einem der vorherigen Ansprüche, wobei der Schritt 7.2) einen oder mehrere der folgenden Unterschritte umfasst:
S7.2.1: Übertragung der zweiten Adresse, der Nutzer-ID, und der zu vom Anbieter zu verifizierendem Feldinhalte vom Neu-Anbieter-Server zum Anbieter-Server;
S7.2.2: Überprüfung durch den Anbieter-Server, ob der Nutzer eine Zustimmung zur Verifikation der zu verifizierenden Feldinhalte erteilt hat durch Vergleich des Inhalts des zweiten Datensatzes an der zweiten Adresse in der Blockchain auf Übereinstimmung mit:
- der Nutzer-ID des Nutzers;
- der Anbieter-ID des Anbieters, bei welchem die verifizierten Nutzer-Daten hinterlegt sind;
- der Feldbezeichner der zu verifizierenden Feldinhalte;
- die Nutzer-ID des Neu-Anbieters
S7.2.3: Wenn Überprüfung aus dem vorherigen Schritt positiv: Prüfung der Identität der zu verifizierenden Feldinhalte des auf dem Anbieter-Server gespeicherten preist verifizierten personenbezogenen Nutzerdatensatzes;
S7.2.4: Wenn die Identitätsprüfung aus dem vorherigen Schritt positiv: Übermittlung des Ergebnisses der Prüfung als Ja/Nein-Wert für alle und/oder jeden einzelnen Feldbezeichner vom Anbieter-Server an den Neu-Anbieter Server, insbesondere ohne Übertragung des Feldinhalts zu den Feldbezeichnern.

8. Verwendung einer über ein Netzwerk zugänglichen elektronischen Einrichtung mit einer Blockchain in einem computerimplementiertem Verfahren, insbesondere nach einem der vorherigen Ansprüche, zur Steuerung und Kontrolle der Verteilung von verifizierten personenbezogenen Nutzer-Daten eines Nutzers auf einer Vielzahl von Anbieter-Servern, auf welchen die Nutzer-Daten in Nutzerdatenbanken vollständig oder verteilt gespeichert sind, wobei die Nutzer-Daten eine Vielzahl von Feldbezeichnern und diesen zugeordneten Feldinhalten aufweisen,
wobei in der Blockchain chronologisch und irreversibel aufgereihte Transaktionen in Form von Datensätzen gespeichert sind, welche jeweils umfassen:
- einen Zeitstempel des Zeitpunkts des Speicherns des Datensatzes in der Blockchain;
- eine Nutzer-ID des Nutzers;
- eine Anbieter-ID eines der Anbieter zu welchem einer der Anbieter-Server zugeordnet ist;
- ein oder mehrere der Feldbezeichner der verifizierten Nutzer-Daten, aber nicht deren zugeordnete Feldinhalte;
- eine elektronische Nutzer-Signatur des Nutzers, welche aus einem privaten Nutzer-Schlüssel erstellt ist und welcher mittels einem in der Blockchain zuvor unter der Nutzer-ID hinterlegtem öffentlichen Nutzer-Schlüssel authentifizierbar ist,
- eine Information, dass der Nutzer
∘ einem bestimmten weiteren Neu-Anbieter den Zugriff oder die Bestätigung der Richtigkeit von den den Feldbezeichnern zugeordneten Feldinhalten durch den Anbieter gestattet; und/oder
∘ einem bestimmten Anbieter den Zugriff auf den Feldbezeichnern zugeordneten Feldinhalten erlaubt und/oder verbietet.

9. Computerprogramm, insbesondere App, auf einem Computer eines Nutzers, insbesondere Smartphone, lauffähig und geeignet zur Durchführung des Verfahrens nach einem der vorherigen Ansprüche im Zusammenspiel mit den in Verfahren genutzten Einrichtungen.
